# EUROPÄISCHE PATENTSCHRIFT

(11) **EP 0 654 334 B1**
(45) Veröffentlichungstag und Bekanntmachung des Hinweises auf die Patenterteilung: **30.09.1998**
(21) Anmeldenummer: 94111103.1
(22) Anmeldetag: 16.07.1994
(51) Int. Cl.: B29B 17/02, B29B 13/02, B29B 13/10, B02C 18/44

(54) **Verfahren und Vorrichtung zum Aufschliessen thermoplastischer Reststoffe**
Method and apparatus for disaggregating plastic waste
Procédé et dispositif pour la désagrégation des déchets thermoplastiques

(30) Priorität: 30.10.1993 DE 4337198
(43) Veröffentlichungstag der Anmeldung: 24.05.1995
(73) Patentinhaber: VEDAG GmbH, 60388 Frankfurt (DE)
(72) Erfinder: Vogel, Hans-Günter, D-65760 Escherborn (DE); Haushofer, Bert, D-61462 Königstein (DE); Heep, Werner, D-60318 Frankfurt/Main (DE)
(74) Vertreter: Berkenfeld, Helmut, Dipl.-Ing.

(56) Entgegenhaltungen:
- EP-A- 0 483 665
- EP-A- 0 605 825
- DATABASE WPI Section Ch, Week 7909, Derwent Publications Ltd., London, GB; Class AMC, AN 79-17162B C9! & JP-A-54 010 274 (SATO M.) 25. Januar 1979
- DATABASE WPI Section Ch, Week 7924, Derwent Publications Ltd., London, GB; Class AMC, AN 79-45093B C24! & JP-A-54 056 680 (YUKI K.) 7. Mai 1979
- PATENT ABSTRACTS OF JAPAN vol. 9, no. 11 (M-351) 18. Januar 1985 & JP-A-59 159 313 (MORUTON HANBAI K.K.) 8. September 1984
- DATABASE WPI Section Ch, Week 7636, Derwent Publications Ltd., London, GB; Class AC, AN 76-68111X C36! & JP-B-51 026 954 (KINOSHITA T.) 11. August 1976

## Beschreibung

Die Erfindung betrifft ein Verfahren zum Aufschließen thermoplastischer Reststoffe durch Aufschmelzen von Reststoffschnitzeln und Zerkleinern der damit verbundenen Feststoffe.

Die Reststoffe können textile Fasergebilde, Metallfolien und andere bei der Wiederverwendung störende Feststoffe enthalten.

Die Erfindung betrifft weiter eine Vorrichtung zum Durchführen dieses Verfahrens.

Bei einer Wiederverwendung müssen thermoplastische Reststoffe so weit aufgeschlossen werden, daß die mit ihnen verbundenen Feststoffe als Füllstoff in der homogenen Masse vorliegen. Nur so lassen sich hochwertige Produkte aus diesem Recyclingmaterial zum Beispiel durch Gießen oder Extrudieren herstellen.

Schnitzel aus thermoplastischen Kunststoffen mit oder ohne Füllstoffe lassen sich zum Beispiel in Schmelzmischern aufschmelzen und homogenisieren. Ein solcher einstufiger Aufschluß ist jedoch nicht möglich, wenn die Reststoffe mit textilen Fasergebilden, Metallfolien oder groben Feststoffen verbunden sind.

Mit beheizten, diskontinuierlich betriebenen Knetern oder Dissolvern lassen sich textile Einlagen und teilweise auch andere Feststoffe in einem gewissen Umfang aufschließen. Eine für Füllstoffe erforderliche Zerkleinerung wird jedoch nicht erreicht, da infolge der eingebrachten kinetischen Energie die Temperatur der Schmelze ansteigt und damit Viskosität und Schergefälle sinken. Ein hohes Schergefälle ist aber für die Zerkleinerung von Feststoffen in einer viskosen Flüssigkeit notwendig.

Aus der DE-A 41 28 014 ist bekannt, Schnitzel von bituminösen Dachbahnen diskontinuierlich in einem mit einem Dissolver ausgerüsteten, beheizbaren Kessel aufzuschmelzen und teilweise aufzuschließen. Die pumpfähige Masse wird dann so lange über ein Heißmahlaggregat geführt, bis die Feststoffe in gewünschter Feinheit vorliegen.

Das Verfahren ist wirkungsvoll, aber wegen des hohen Verschleißes der teuren Mahlwerkzeuge aufwendig. Außerdem ist eine Kontrolle der Gleichmäßigkeit der Feststoffeinheit schwierig.

Hiervon ausgehend ergibt sich für die Erfindung die Aufgabe, ein Verfahren und eine Vorrichtung zu entwickeln, um thermoplastische Reststoffschnitzel, die mit textilen Fasergebilden, Metallfolien und/oder körnigen Mineralstoffen verbunden sind, in einfacher Weise so aufzuschließen, daß die Feststoffe in gleichmäßiger Feinheit als Füllstoff in der Masse vorliegen.

Die Lösung für diese Aufgabe ergibt sich nach der Erfindung mit einem Verfahren, bei dem die Reststoffschnitzel kontinuierlich in einen Schmelzkessel eingefüllt und unter Rühren aufgeschmolzen werden, die Feststoffe von Dissolverscheiben mit unterschiedlichen Drehzahlen zerkleinert werden und die geschmolzene Masse abgezogen und in einer Trennvorrichtung in eine Rückstandsfraktion mit groben Feststoffen und eine Klarlauffraktion mit feinen Feststoffen aufgetrennt wird, wobei die Rückstandsfraktion in den Schmelzkessel zurückgeführt und die Klarlauffraktion kontinuierlich ausgeschleust und durch Zugabe von Reststoffschnitzeln in den Schmelzkessel ersetzt wird.

Beim Anfahren der Anlage wird der Schmelzkessel vorzugsweise zunächst etwa zu einem Viertel gefüllt und die Masse, sobald sie pumpfähig ist, unter Fortsetzung der Befüllung über einen Wärmeaustauscher umgepumpt, um den Aufschmelzvorgang zu verkürzen.

Nachdem der Kessel gefüllt und sein Inhalt aufgeschmolzen ist, wird der Kreislauf unterbrochen und die Masse über die Trennvorrichtung geführt. Von da an läuft das Verfahren kontinuierlich. Eine Füllstandsmeßvorrichtung im Schmelzkessel steuert dabei die Zufuhr an Reststoffschnitzeln, so daß diese entsprechend der Menge der ausgeschleusten Klarlauffraktion aufgeschmolzen werden.

In der Anlage stellt sich ein Gleichgewicht zwischen den im Kreislauf geführten und den ausgeschleusten Feststoffen ein. Werden weniger Feststoffe ausgeschleust als in die Anlage eingebracht, erhöht sich der Feststoffgehalt der Masse im Schmelzkessel und damit das Schergefälle. Das hat einen erhöhten Zerkleinerungseffekt an den Dissolverscheiben zur Folge. Dadurch nimmt die Menge der ausgeschleusten Feststoffe wieder zu.

Hauptbestandteil der Vorrichtung ist ein beheizbarer Schmelzkessel 1, in dem Dissolverscheiben 2 und 4 auf Wellen mit unterschiedlichen Drehzahlen so angeordnet sind, daß die Dissolverscheiben 2 der einen Welle in die Zwischenräume der Dissolverscheiben 4 der anderen Welle eingreifen. Der Kessel 1 ist außerdem mit einem Einfüllstutzen für die Reststoffschnitzel 12, einem Stutzen für den im Kreislauf geführten Teil der Masse, einer Füllstandsmeßvorrichtung 10 zur Regelung der eingespeisten Menge an Reststoffschnitzeln 12 und einem Auslaßstutzen versehen. Der Auslaßstutzen ist über eine Pumpe 5 und eine Leitung, in der noch ein Wärmeaustauscher 6 integriert sein kann, mit der Trennvorrichtung 8 verbunden, die einen Klarlaufaustritt und einen Rückstandsaustritt hat. Der letztere ist über die Pumpe 9 mit dem Stutzen des Schmelzkessels 1 für den im Kreislauf geführten Teil der Masse verbunden. Außerdem ist in der Leitung zum Schmelzkessel 1 für das Anfahren noch ein Bypaß zur Umgehung der Trennvorrichtung 8 vorgesehen.

Als Trennvorrichtung kann eine Dekanterzentrifuge, ein Zyklon oder ein Filter vorgesehen werden. Bevorzugt wird ein selbstreinigendes Filter, weil damit eine gleichbleibende Feststoffeinheit in der Klarlauffraktion unabhängig von der Dichte der Feststoffe erreicht wird. Dabei ist die Pumpe 9 über den Filtervordruck steuerbar.

Die Differenzdrehzahl der Dissolverscheibengruppen zueinander beträgt vorzugsweise 400 bis 2 500 min⁻¹. Dabei können die Dissolverscheiben auf schnellaufenden Wellen um solche auf einer stehenden, langsam laufenden oder gegenläufigen Welle angeordnet sein.

Der Vorteil der Erfindung liegt darin, daß gleichzeitig mit dem Aufschmelzen des thermoplastischen Materials eine Zerkleinerung der Feststoffe bis zur gewünschten Feinheit stattfindet und damit ein zusätzlicher Mahlvorgang eingespart wird. Der Verschleiß ist auf die relativ preiswerten Dissolverscheiben beschränkt, und die Mahlfeinheit ist allein durch die Wahl der Trennvorrichtung festgelegt. Damit ist eine gleichbleibende Aufschlußgüte der fertigen Masse gesichert.

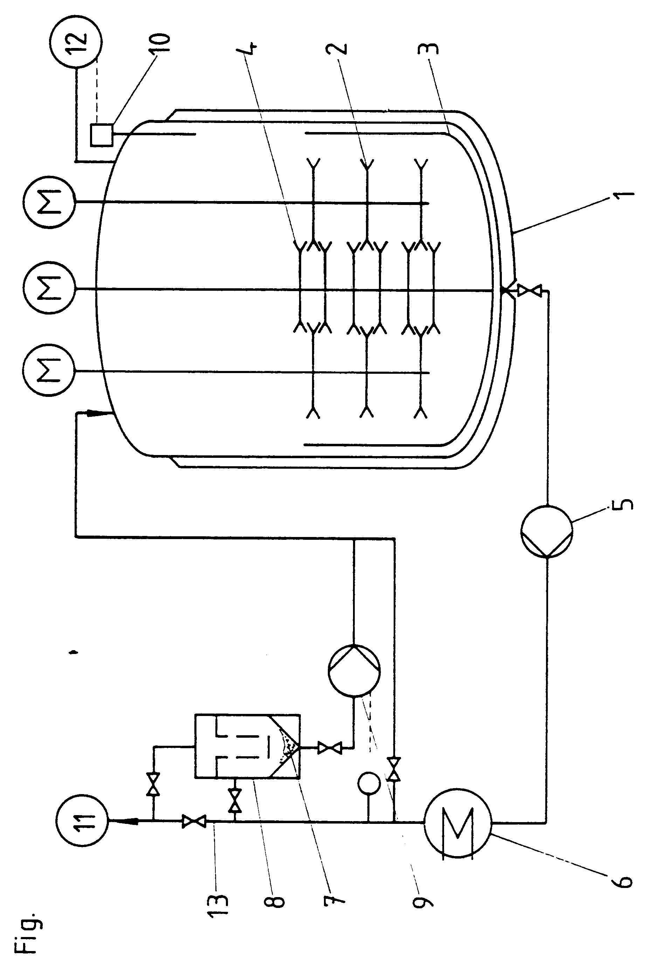

Die Erfindung wird anhand der Zeichnung näher erläutert. Der beheizte Schmelzkessel 1 ist mit sechs Dissolverscheiben ausgerüstet, die auf zwei Wellen mit einer Nenndrehzahl von 1 200 min⁻¹ in gleicher Weise angeordnet sind. Auf der Welle des mit einer Nenndrehzahl von 16 min⁻¹ umlaufenden Abstreifers 3 sind weitere sechs Dissolverscheiben 4 paarweise so angeordnet, daß sie die Dissolverscheiben 2 teilweise einschließen. Der Abstand zwischen den geschränkten, scharfkantigen Zähnen der Scheiben 2 und 4 zueinander beträgt dabei nur 5 bis 100 mm.

Im Anfahrzustand werden die Reststoffschnitzel 12 z. B. von bituminösen Dachbahnen mit einer Glasgewebeeinlage und einer Schieferabstreuung in den Schmelzkessel 1 bei umlaufenden Dissolverscheiben 2 und 4 eingespeist und durch Zufuhr von thermischer und kinetischer Energie nach kurzer Zeit in eine pastöse, pumpfähige Masse umgewandelt.

Sobald der Kessel 1 zu etwa einem Viertel gefüllt ist, wird die Masse mittels der Pumpe 5 über den Wärmeaustauscher 6 und dem Bypaß zum Kessel 1 umgepumpt, bis der Kessel 1 vollständig gefüllt und die Viskosität der Masse soweit abgesunken ist, daß sie filtrierbar ist. Durch das Fahren im Kreislauf mit zusätzlicher Wärmezufuhr wird der Anfahrprozeß erheblich abgekürzt.

Nun wird die Masse über ein kontinuierlich selbstreinigendes Spaltfilter 8 mit einer Spaltweite von 0,3 mm gepumpt und die noch nicht ausreichend zerkleinerten Feststoffe abgeschieden und im Sumpf angereichert. Über die Pumpe 9 wird die abgetrennte Rückstandsfraktion 7 in den Schmelzkessel 1 zurückgeführt, wobei die Pumpe 9 über den Vordruck des Filters 8 gesteuert wird. Die Klarlauffraktion 11 wird ausgeschleust und der Verlust durch Zuspeisung von Reststoffschnitzeln 12 in den Kessel 1 ausgeglichen. Die Dosierung der Schnitzel 12 wird dabei über den Füllstandsmesser 10 gesteuert.

Um den Schmelzkessel 1 leerfahren zu können, ist ein weiterer Bypaß 13 zur Umgehung des Filters 8 vorgesehen.

## Patentansprüche

1. Verfahren zum Aufschließen thermoplastischer Reststoffe durch Aufschmelzen von Reststoffschnitzeln und Zerkleinern der damit verbundenen Feststoffe, dadurch gekennzeichnet, daß die Reststoffschnitzel (12) kontinuierlich in einen Schmelzkessel (1) eingefüllt und unter Rühren aufgeschmolzen werden, die Feststoffe von Dissolverscheiben (2, 4) mit unterschiedlichen Drehzahlen zerkleinert werden und die geschmolzene Masse abgezogen und in einer Trennvorrichtung (8) in eine Rückstandsfraktion (7) mit groben Feststoffen und eine Klarlauffraktion (11) mit feinen Feststoffen aufgetrennt wird, wobei die Rückstandsfraktion (7) in den Schmelzkessel (1) zurückgeführt und die Klarlauffraktion (11) kontinuierlich ausgeschleust und durch Zugabe von Reststoffschnitzeln (12) in den Schmelzkessel (1) ersetzt wird.

2. Verfahren nach Anspruch 1, dadurch gekennzeichnet, daß beim Anfahren die pumpfähige Masse während des Einfüllens der Reststoffschnitzel (12) in den Schmelzkessel (1) über einen Wärmeaustauscher (6) umgepumpt wird.

3. Verfahren nach Anspruch 1 oder 2, dadurch gekennzeichnet, daß die geschmolzene Masse durch Filtrieren in zwei Fraktionen (7, 11) zerlegt wird.

4. Vorrichtung zum Durchführen des Verfahrens nach einem der Ansprüche 1 bis 3, die einen beheizbaren Schmelzkessel (1) aufweist, der mit auf Wellen angeordneten Dissolverscheiben (2, 4), mit einer Füllstandsmeßvorrichtung (10) und mit Einfüll- und Auslaßstutzen versehen ist, wobei die Dissolverscheiben (2) der einen Welle in die Zwischenräume der Dissolverscheiben (4) der anderen Welle eingreifen, dessen Ablaßstutzen über eine Pumpe (5) mit einer Trennvorrichtung (8) verbunden ist, die mit einem Austritt für die Klarlauffraktion (11) und einem anderen für die Rückstandsfraktion (7) versehen ist, wobei der Austritt für die Rückstandsfraktion (7) über eine Pumpe (9) mit dem Schmelzkessel (1) verbunden ist.

5. Vorrichtung nach Anspruch 4, dadurch gekennzeichnet, daß sich zwischen Pumpe (5) und Trennvorrichtung (8) ein Wärmeaustauscher (6) befindet und als Umgehung der Trennvorrichtung (8) ein Bypaß zum Schmelzkessel (1) eingebaut ist.

6. Vorrichtung nach Anspruch 4 oder 5, dadurch gekennzeichnet, daß der Abstand der Zähne der Dissolverscheiben (2) der einen Welle zu denen der Dissolverscheiben (4) der anderen Welle 5 bis 100 mm beträgt.

## Claims

1. A process for breaking down thermoplastic residue materials by melting residue material scraps and crushing the solids joined thereto, characterised in that the residue material scraps (12) are continuously introduced into a melting boiler (1) and melted with agitation, the solids are crushed by dissolver discs (2, 4) at different speeds of rotation and the molten material is drawn off and separated in a separation apparatus (8) into a residual fraction (7) with coarse solids and a clear flow fraction (11) with fine solids, wherein the residual fraction (7) is recycled to the melting boiler (1) and the clear flow fraction (11) is continuously discharged and replaced by a feed of residue material scraps (12) into the melting boiler (1).

2. A process according to claim 1 characterised in that when starting up the pumpable mass is pumped around by way of a heat exchanger (6) during the operation of introducing the residue material scraps (12) into the melting boiler (1).

3. A process according to claim 1 or claim 2 characterised in that the molten mass is divided into two fractions (7, 11) by filtration.

4. Apparatus for carrying out the process according to one of claims 1 to 3 which has a heatable melting boiler (1) provided with dissolver discs (2, 4) arranged on shafts, a filling level measuring device (10) and filling and outlet connections, wherein the dissolver discs (2) of the one shaft engage into the intermediate spaces between the dissolver discs (4) of the other shaft, its outlet connection is connected by way of a pump (5) to a separation apparatus (8) which is provided with an outlet for the clear flow fraction (11) and another for the residual fraction (7), wherein the outlet for the residual fraction (7) is connected to the melting boiler (1) by way of a pump (9).

5. Apparatus according to claim 4 characterised in that a heat exchanger (6) is disposed between the pump (5) and the separation apparatus (8) and a by-pass to the melting boiler (1) is included for by-passing the separation apparatus (8).

6. Apparatus according to claim 4 or claim 5 characterised in that the spacing of the teeth of the dissolver discs (2) of the one shaft is from 5 to 100 mm in relation to those of the dissolver discs (4) of the other shaft.

## Revendications

1. Procédé de désagrégation de matières résiduelles thermoplastiques par fusion de rognures de matière résiduelle et par broyage des matières solides liées avec celles-ci, caractérisé par le fait que les rognures de matière résiduelle (12) sont introduites continuellement dans une chaudière de fusion (1) et sont fondues tout en remuant, les matières solides sont broyées par des disques dissolveurs (2, 4) ayant des vitesses différentes et la masse fondue est évacuée et séparée dans un dispositif de séparation (8) en une fraction de résidus (7) avec de grosses matières solides et en une fraction claire (11) avec des matières solides fines, la fraction de résidus (7) étant reconduite dans la chaudière de fusion (1) et la fraction claire (11) étant enlevée continuellement et remplacée par addition de rognures de matière résiduelle (12) dans la chaudière de fusion (1).

2. Procédé selon la revendication 1, caractérisé par le fait que, lors du démarrage, la boue liquide est transvasée par un échangeur de chaleur (6) durant l'introduction des rognures de matière résiduelle (12) dans la chaudière de fusion (1).

3. Procédé selon la revendication 1 ou 2, caractérisé par le fait que la masse fondue est décomposée par filtration en deux fractions (7, 11).

4. Dispositif pour la mise en oeuvre du procédé selon l'une des revendications 1 à 3, qui présente une chaudière de fusion (1) qui peut être chauffée et qui est pourvue de disques dissolveurs (2, 4) disposés sur des arbres, d'un dispositif à mesurer le niveau (10) ainsi que de tubulures de remplissage et de sortie, les disques dissolveurs (2) de l'un des arbres engrènant dans les intervalles des disques dissolveurs (4) de l'autre arbre, dont la tubulure de sortie communique par le biais d'une pompe (5) avec un dispositif de séparation (8) qui est muni d'une sortie pour la fraction claire (11) et d'une autre pour la fraction de résidus (7), la sortie pour la fraction de résidus (7) communiquant par l'intermédiaire d'une pompe (9) avec la chaudière de fusion (1).

5. Dispositif selon la revendication 4, caractérisé par le fait qu'un échangeur de chaleur (6) se trouve entre la pompe (5) et le dispositif de séparation (8) et qu'un by-pass vers la chaudière de fusion (1) est installé pour dériver le dispositif de séparation (8).

6. Dispositif selon la revendication 4 ou 5, caractérisé par le fait que la distance entre les dents des disques dissolveurs (2) de l'un des arbres et celles des disques dissolveurs (4) de l'autre arbre est comprise entre 5 et 100 mm.
